# EUROPÄISCHE PATENTSCHRIFT

(11) **EP 1 459 368 B1**
(45) Veröffentlichungstag und Bekanntmachung des Hinweises auf die Patenterteilung: **27.02.2008**
(21) Anmeldenummer: 02796629.0
(22) Anmeldetag: 13.12.2002
(51) Int. Cl.: H01L 21/302, H01L 21/306

(54) **VERWENDUNG VON STRONTIUMCARBONAT ALS SCHLEIFMITTEL BEIM CHEMISCH-MECHANISCHEM POLIEREN VON MIKROELEKTRONISCHEN BAUTEILEN**
USE OF STRONTIUM CARBONATE AS POLISHING AGENT FOR THE CHEMICAL AND MECHANICAL POLISHING OF MICROELECTRONIC COMPONENTS
UTILISATION DE CARBONATE DE STRONTIUM COMME AGENT DE POLISSAGE POUR LE POLISSAGE CHIMIQUE ET MECANIQUE DE COMPOSANTS MICROELECTRONIQUES

(30) Priorität: 21.12.2001 DE 10163570
(43) Veröffentlichungstag der Anmeldung: 22.09.2004
(73) Patentinhaber: Solvay Infra Bad Hönningen GmbH, 30173 Hannover (DE)
(72) Erfinder: KÖHLER, Karl, 31199 Diekholzen (DE); HARDINGHAUS, Ferdinand, 53557 Bad Hönningen (DE); PARK, Jai-Won, 37085 Göttingen (DE)
(74) Vertreter: Vande Gucht, Anne
(86) Internationale Anmeldenummer: PCT/EP2002/014221
(87) Internationale Veröffentlichungsnummer: WO 2003/054944

(56) Entgegenhaltungen:
- GB-A- 826 332
- US-A- 4 383 936
- US-A- 5 763 325
- US-A- 6 110 832
- PATENT ABSTRACTS OF JAPAN vol. 1999, no. 04, 30. April 1999 (1999-04-30) & JP 11 012560 A (SUMITOMO OSAKA CEMENT CO., LTD.), 19. Januar 1999 (1999-01-19)

## Beschreibung

Die Erfindung bezieht sich auf die Verwendung von Strontiumcarbonat als Hilfsmittel beim chemisch-mechanischen Polieren (CMP-Verfahren) von mikroelektronischen Bauteilen.

In bestimmten Gebieten der Technik werden oft Bauteile benötigt, die auf mindestens einer Seite zu einem bestimmten Profil poliert sein müssen, beispielsweise müssen sie gleichförmig flach sein und eine niedrige Oberflächenrauheit aufweisen. Hierzu gehören beispielsweise optische Komponenten, Halbleiterbauteile und Keramiken. Eine Methode, solche Bauteile hochgradig poliert herzustellen, ist die Methode des chemisch-mechanischen Polierens unter Zuhilfenahme von polierenden Aufschlämmungen ("polishing slurries"). Üblicherweise wird das chemisch-mechanische Polieren ("CMP") wie folgt beschrieben durchgeführt. Das zu polierende Werkstück, beispielsweise ein Silicium-Wafer, wird mit der zu polierenden Fläche nach unten auf eine rotierende Druckplatte ("platen") positioniert. Dabei wird der Wafer durch einen Träger fixiert. Wafer und Druckplatte rotieren in der gleichen Richtung. Auf der Oberfläche der Druckplatte befindet sich ein Polierkissen oder eine Polierunterlage ("polishing pad") mit einer polierenden Aufschlämmung. Die polierende Aufschlämmung enthält sehr feine Schleifmittel, beispielsweise Siliciumdioxid oder Ceroxid. Wenn Oxidschichten poliert werden sollen, verwendet man gewöhnlich eine basische Aufschlämmung, beispielsweise eine Kalilauge oder Ammoniakwasser enthaltende Aufschlämmung mit einem pH-Wert im Bereich von 10 bis 11. Um Metalle zu polieren, beispielsweise Wolfram, setzt man Aufschlämmungen ein, die typischerweise ein Oxidationsmittel wie Wasserstoffperoxid enthalten und einen niedrigen pH-Wert, beispielsweise von 0,5 bis 4, aufweisen. Das US-Patent 5,695,384 lehrt die Verwendung von Aufschlämmungen im neutralen pH-Bereich, wobei kolloidales Siliciumdioxid eingesetzt wird, dem ein lösliches Halogenidsalz, beispielsweise Natriumchlorid, zugesetzt ist. Mit solchen.Aufschlämmungen können Keramiken wie Bariumstrontiumtitanat, aber auch andere Materialien wie Galliumarsenid, Diamant, Siliciumcarbid und andere Perowskitmaterialien poliert werden.

Aufgabe der vorliegenden Erfindung ist es, weitere gut brauchbare Schleifmittel zur Anwendung in CMP-Verfahren anzugeben. Diese Aufgabe wird durch die Erfindung gelöst.

Erfindungsgemäß wird Strontiumcarbonat als Schleifmittel beim chemisch-mechanischen Polieren von mikroelektronischen Bauteilen eingesetzt.

Das Strontiumcarbonat wird in Form einer Aufschlämmung eingesetzt. Man kann wäßrige Aufschlämmungen einsetzen, oder Aufschlämmungen, die zusätzlich zu Wasser oder anstelle von Wasser organische Flüssigkeiten wie Dihydroxyverbindungen, z. B. Glycole enthalten.

Es wird möglichst feinteiliges Salz eingesetzt. Bevorzugt ist die durchschnittliche Partikelgröße d50 kleiner oder gleich 0,3 µm, gemessen nach der Laserbeugungs-Methode (beispielsweise auf einem Coulter LS 230). Besonders bevorzugt ist die durchschnittliche Partikelgröße d50 kleiner als oder gleich 0,2 µm. Besonders bevorzugt setzt man Strontiumcarbonat ein, bei welchem d100 kleiner als oder gleich 4 µm, vorzugsweise 1 µm, insbesondere kleiner als oder gleich 0,4 µm ist.

Ganz besonders bevorzugt setzt man synthetisches Strontiumcarbonat ein. Man kann es prinzipiell herstellen, indem man Strontiumhydroxid, beispielsweise als wäßrige Lösung, mit Kohlendioxid oder Alkalimetallcarbonaten umsetzt. Das benötigte feinteilige Strontiumcarbonat kann man herstellen wie in den internationalen Anmeldungen WO 97/15530, WO 01/49609 und der deutschen Anmeldung DE 100 26 791 beschrieben. Dabei fällt man die Carbonate durch Umsetzen von entsprechenden Laugen mit Kohlendioxid in einem kontinuierlich arbeitenden Mischreaktor, in welchem Scher-, Schub- und Reibungskräfte von ineinandergreifenden Werkzeugen mit hoher Relativgeschwindigkeit auf die Reaktionsmischung einwirken. Dabei arbeitet der Mischreaktor nach dem Rotor-Stator-Prinzip mit sehr hoher Drehzahl (mehrere tausend Umdrehungen pro Minute).

Die wäßrige Aufschlämmung enthält 1 bis 80 Gew.-% an Erdalkalimetallsalz. Eine gebrauchsfertige Aufschlämmung enthält vorteilhaft 1 bis 15 Gew.-%, vorzugsweise 5 bis 10 Ges.-% des Schleifmittels. Ein Konzentrat, beispielsweise für den Transport, enthält vorteilhaft hohe Konzentrationen des Schleifmittels, z. B. bis 80 Gew.-% vorzugsweise 5 bis 60 Gew.-%, gewünschtenfalls auch noch mehr. Die Aufschlämmung kann übliche Hilfsmittel enthalten. Der Rest auf 100 Gew.-% ist durch Wasser, organische Flüssigkeiten bzw. gegebenenfalls vorhandene übliche Hilfsmittel gebildet.

Bevorzugt sind Dispersionsadditive enthalten. Es sind die üblichen Dispergiermittel brauchbar, z. B. Polyacrylate. Ein handelsübliches Mittel ist z. B. Dispex N40. Dispergiermittel gewährleisten die feine Partikelgröße und verhindern Agglomerisation und Sedimentation.

Der pH-Wert liegt, beim Oxid-Schleifen, vorteilhaft oberhalb von 8.

Statt oder zusätzlich zu Wasser können auch andere Flüssigkeiten eingesetzt werden, z. B. die im US-Patent 5,695,384 genannten Glycole und Alkohole.

Das Verfahren kann in üblichen CMP-Maschinen durchgeführt werden. Rotierende Maschinen können eingesetzt werden, aber auch Maschinen, die nach der Methode der linearen Planarisation ("Linear Planarisation Technology", LPT) arbeiten.

Der besondere Vorteil von Strontiumcarbonat ist seine Ungiftigkeit.

## Patentansprüche

1. Verwendung von Strontiumcarbonat als Schleifmittel beim chemischmechanischem Polieren von mikroelektronischen Bauteilen.

2. Verwendung nach Anspruch 1, **dadurch gekennzeichnet, daß** man Strontiumcarbonat einsetzt, bei welchem die durchschnittliche Partikelgröße d50, gemessen nach der Laserbeugungs-Methode, kleiner oder gleich 0,3 µm ist.

3. Verwendung nach Anspruch 2, **dadurch gekennzeichnet, daß** man Strontiumcarbonat einsetzt, bei welchem die durchschnittliche Partikelgröße d50, gemessen nach der Laserbeugungs-Methode, kleiner als oder gleich 0,2 µm ist.

4. Verwendung nach Anspruch 1, **dadurch gekennzeichnet, daß** man synthetisches Strontiumcarbonat einsetzt.

5. Verwendung nach Anspruch 1, **dadurch gekennzeichnet, daß** man Strontiumcarbonat einsetzt, bei welchem d100, gemessen nach der Laserbeugungs-Methode, kleiner als oder gleich 4 µm, vorzugsweise kleiner als oder gleich 1 µm, ist.

6. Verwendung nach Anspruch 1, **dadurch gekennzeichnet, daß** man Strontiumcarbonat in Form einer wäßrigen Aufschlämmung einsetzt.

7. Verwendung nach Anspruch 6, **dadurch gekennzeichnet, daß** die wäßrige Aufschlammung 1 bis 80 Gew.-%, vorzugsweise 5 bis 60 Gew.-%, an Strontiumcarbonat enthält.

8. Verwendung nach Anspruch 6, **dadurch gekennzeichnet, daß** die wäßrige Aufschlämmung mindestens ein Dispersionsadditiv enthält.

9. Verwendung nach Anspruch 6, **dadurch gekennzeichnet, daß** die wäßrige Aufschlämmung einen pH oberhalb 8 hat.

10. Verwendung nach Anspruch 6, **dadurch gekennzeichnet, daß** die wäßrige Aufschlämmung mindestens eine organische Flüssigkeit enthält.

## Claims

1. Use of strontium carbonate as abrasive in the chemical mechanical polishing of microelectronic components.

2. Use according to Claim 1, **characterized in that** the strontium carbonate used has an average particle size d50, as measured by the laser diffraction method, of less than or equal to 0.3 µm.

3. Use according to Claim 2, **characterized in that** the strontium carbonate used has an average particle size d50, as measured by the laser diffraction method, of less than or equal to 0.2 µm.

4. Use according to Claim 1, **characterized in that** synthetic strontium carbonate is used.

5. Use according to Claim 1, **characterized in that** the strontium carbonate used has a d100, as measured by the laser diffraction method, of less than or equal to 4 µm and preferably of less than or equal to 1 µm.

6. Use according to Claim 1, **characterized in that** strontium carbonate is used in the form of an aqueous slurry.

7. Use according to Claim 6, **characterized in that** the aqueous slurry contains 1 to 80 wt %, preferably 5 to 60 wt %, of strontium carbonate.

8. Use according to Claim 6, **characterized in that** the aqueous slurry comprises at least one dispersion additive.

9. Use according to Claim 6, **characterized in that** the aqueous slurry has a pH above 8.

10. Use according to Claim 6, **characterized in that** the aqueous slurry comprises at least one organic liquid.

## Revendications

1. Utilisation de carbonate de strontium comme agent de polissage dans le polissage chimio-mécanique de composants micro-électroniques.

2. Utilisation selon la revendication 1, **caractérisée en ce qu'**on utilise du carbonate de strontium dans lequel la taille particulaire moyenne d50, mesurée selon le procédé de la diffraction au laser, est inférieure ou égale à 0,3 µm.

3. Utilisation selon la revendication 2, **caractérisée en ce qu'**on utilise du carbonate de strontium dans lequel la taille particulaire moyenne d50, mesurée selon le procédé de la diffraction au laser, est inférieure ou égale à 0,2 µm.

4. Utilisation selon la revendication 1, **caractérisée en ce qu'**on utilise du carbonate de strontium de synthèse.

5. Utilisation selon la revendication 1, **caractérisée en ce qu'**on utilise du carbonate de strontium dans lequel d100, mesurée selon le procédé de la diffraction au laser, est inférieure ou égale à 4 µm, de préférence inférieure ou égale à 1 µm.

6. Utilisation selon la revendication 1, **caractérisée en ce qu'**on utilise du carbonate de strontium sous la forme d'une suspension aqueuse.

7. Utilisation selon la revendication 6, **caractérisée en ce que** la suspension aqueuse contient de 1 à 80 % en poids, de préférence de 5 à 60 % en poids, de carbonate de strontium.

8. Utilisation selon la revendication 6, **caractérisée en ce que** la suspension aqueuse contient au moins un additif de dispersion.

9. Utilisation selon la revendication 6, **caractérisée en ce que** la suspension aqueuse a un pH supérieur à 8.

10. Utilisation selon la revendication 6, **caractérisée en ce que** la suspension aqueuse contient au moins un liquide organique.
